# EUROPEAN PATENT SPECIFICATION

(11) **EP 0 357 101 B1**
(45) Date of publication and mention of the grant of the patent: **28.02.1996**
(21) Application number: 89201849.0
(22) Date of filing: 12.07.1989
(51) Int. Cl.: C08G 67/02

(54) **Copolymers of carbon monoxide**
Kohlenstoffmonoxidcopolymere
Copolymères de monoxyde de carbone

(30) Priority: 13.07.1988 NL 8801773
(43) Date of publication of application: 07.03.1990
(73) Proprietor: SHELL INTERNATIONALE RESEARCH MAATSCHAPPIJ B.V., NL-2596 HR Den Haag (NL)
(72) Inventor: Drent, Eit, NL-1031 CM Amsterdam (NL)

(56) References cited:
- EP-A- 0 229 408
- BE-A- 887 627
- US-A- 4 424 317

## Description

The invention relates to copolymers of carbon monoxide with one or more mono-olefinically unsaturated compounds and with one or more diolefinically unsaturated compounds, and to a process for their preparation.

High molecular weight linear copolymers of carbon monoxide with one or more mono-olefinically unsaturated compounds (for the sake of brevity referred to as A) in which the double bond is present in terminal position, and in which polymers the monomer units -(CO)- on the one hand, and the units -A′- originating in the applied monomers A on the other hand, occur in alternating order, can be prepared by contacting the monomers at an elevated temperature and pressure with a catalyst composition which includes a Group VIII metal and a bidentate ligand.

The above-described polymers contain carbonyl groups as functional groups. At least part of these carbonyl groups can be converted into other functional groups by means of chemical reaction. This chemical modification leads to changes in the polymer properties, which render them eligible for uses for which the original polymers were not or not very suitable.

The Applicant has recently carried out an investigation into the introduction of olefinically unsaturated double bonds into the above-mentioned polymers, with the object of preparing polymers which are suitable for cross linking and further chemical modification by addition reactions at the double bonds. At first, attempts were made to achieve the object by converting part of the carbonyl groups present in the polymers into hydroxyl groups by catalytic hydrogenation followed by catalytic dehydration. This, however, was found to be an unsuitable route to the introduction of olefinically unsaturated double bonds into these polymers. Owing to various side reactions, the mixture of polymers formed is one in which much of the linear structure of the polymers is lost while the introduction of olefinically unsaturated double bonds into the polymers remains minimal.

During further research into this subject, the Applicant tried to achieve the objective by including in the monomer mixture from which these polymers are prepared, besides carbon monoxide and one or more monomers A, one or more diolefinically unsaturated compounds in which at least one of the double bonds is in terminal position and in which the two double bonds occur separate from one another. On the basis of the position which the two double bonds occupy in the molecule in respect to one another, the said diolefinically unsaturated compounds may be divided into two classes, viz.
a) diolefinically unsaturated compounds in which the two double bonds are conjugated. Examples of such a,c-diolefinically unsaturated compounds are butadiene-1,3, isoprene, chloroprene and hexadiene-1,3.
b) diolefinically unsaturated compounds in which the two double bonds are separate from one another and non-conjugated. Examples of such diolefinically unsaturated compounds are pentadiene-1,4, hexadiene-1,4, hexadiene-1,5, octadiene-1,6 and octadiene-1,7.

An investigation into the application of the above-mentioned diolefinically unsaturated compounds as co-monomers in the copolymerization of carbon monoxide with one or more monomers A by using Group VIII metal/bidentate ligand catalyst compositions has shown that the results obtained are to a large extent dependent on whether the compound used belongs to class a) or to class b).

Taking up compounds belonging to class a) in the monomer mixture has indeed been found to be a method of preparing polymers which, in addition to units originating in carbon monoxide and units originating in one or more monomers A, include units originating in one or more diolefinically unsaturated compounds used, but it is a method by which only a relatively small portion of the diolefinically unsaturated compounds are incorporated in the polymers, while the achieved polymerization rates are relatively low.

For the compounds belonging to class b), it was surprisingly found that starting from monomer mixtures which, in addition to carbon monoxide and one or more monomers A, include one or more compounds belonging to class b) (for the sake of brevity referred to as B) and using the afore-mentioned catalyst compositions containing a Group VIII metal and a bidentate ligand, it is possible to prepare polymers which, in addition to units originating in carbon monoxide and units originating in one or more monomers A, include units originating in one or more diolefinically unsaturated compounds used, as is the case when using compounds belonging to class a), but that the amount of diolefinically unsaturated compounds that are incorporated in the polymers in this way is considerably larger, while the achieved polymerization rates are considerably higher. The polymers prepared in this way consist of units of the general formula -(CO)-A'- and units of the general formula -(CO)-B'-, in which B' represents a monomer unit derived from a monomer B used, and they contain on average fewer than 200 units -(CO)-A'- per unit -(CO)-B'-.

Recapitulating, the polymers to which the present invention relates are defined as follows
a) they are obtainable by contacting a mixture of carbon monoxide with one or more mono-olefinically unsaturated compounds (A) in which the double bond is present in terminal position and with one or more diolefinically unsaturated compounds (B) in which at least one of the double bonds occurs in terminal position and in which the two double bonds are non-conjugated and separate from one another, at a temperature of 20-150°C and a pressure of 2-150 bar with a catalyst composition containing a Group VIII metal and a bidentate ligand,
b) they consist of units of the general formula -(CO)-A'- and units of the general formula -(CO)-B'-, in which A' and B' represent monomer units derived from applied monomers A and B, respectively, such that the monomer units -(CO)- alternate with the monomer units -A'- or -B'-, and
c) on average, they contain fewer than 200 units -(CO)-A'- per unit -(CO)-B'-.

Polymers that satisfy the criteria a)-c) are novel polymers.

The present patent application therefore relates to novel polymers of carbon monoxide with one or more mono-olefinically unsaturated compounds and with one or more diolefinically unsaturated compounds, which polymers satisfy the criteria mentioned hereinbefore under a)-c). The patent application further relates to the preparation of these polymers.

Preferably, the polymers of the invention contain on average fewer than 150, and in particular on average fewer than 100, units -(C)-A′- per unit -(C)-B′-. The monomers A and B used in the preparation of the polymers of the invention preferably contain at most 10 carbon atoms in the molecule. Further, it is preferred to prepare the polymers from a monomer mixture containing only one monomer A and only one monomer B. Eligible olefinically unsaturated compounds which are polymerized with carbon monoxide in the preparation of the polymers of the invention are both compounds which consist exclusively of carbon and hydrogen and compounds which, in addition to carbon and hydrogen, contain one or more hetero-atoms. Preference is given to the use of olefinically unsaturated hydrocarbons as monomers A and B. Examples of suitable mono-olefinically unsaturated compounds which can be suitably used as monomers A are ethene and styrene. Examples of diolefinically unsaturated compounds which can be suitably used as monomers 8 are hexadiene-1,5 and octadiene-1,7.

In addition to carbonyl groups, the polymers of the invention include olefinically unsaturated double bonds as functional groups. Like the carbonyl groups, these olefinically unsaturated double bonds can be converted at least partly into other functional groups by means of chemical modification.

As was stated hereinbefore, the polymers of the invention can be prepared by contacting the monomers at an elevated temperature and pressure with a catalyst composition containing a Group VIII metal and a bidentate ligand.

In the present patent application, Group VIII metals should be taken to be the noble metals ruthenium, rhodium, palladium, osmium, iridium and platinum, and the iron group metals iron, cobalt and nickel.

In the catalyst compositions that may be used in the preparation of the polymers of the invention, the preferred Group VIII metal is chosen from palladium, nickel and cobalt. Special preference is given to palladium as Group VIII metal. By preference, the Group VIII metal is taken up in the catalyst composition in the form of a salt of a carboxylic acid, in particular in the form of an acetate. In addition to a Group VIII metal and a bidentate ligand, the catalyst compositions that can be used in the preparation of the polymers of the invention preferably include an anion of an acid with a pKa of less than 4 (determined in aqueous solution at 18°C) and in particular an anion of an acid with a pKa of less than 2. Examples of acids with a pKa of less than 2 are sulphuric acid, perchloric acid, sulphonic acids, such as methane sulphonic acid, trifluoromethane sulphonic acid and para-toluenesulphonic acid, and halogen carboxylic acids, such as trichloroacetic acid, difluoro acetic acid and trifluoro acetic acid. Preference is given to a sulphonic acid, such as paratoluenesulphonic acid or a halogen carboxylic acid, such as trifluoroacetic acid. The anion of an acid with a pKa of less than 4 may be taken up in the catalyst composition in the form of an acid and/or in the form of a salt, such as a cupric salt. Preferably, the anion is present in the catalyst compositions in a quantity of 1-1000 and in particular of 2-100 equivalents per mol of Group VIII metal. The anions of acids with a pKa of less than 4 may be present in the catalyst compositions of the invention because they have been added as separate components, or because such a palladium compound, for instance, as palladium trifluoro acetate or palladium para-tosylate is used, or because ortho-(diphenylphosphino) benzenesulphonic acid or 3-(diphenylphosphino) propanesulphonic acid is used as bidentate ligand.

In addition to a Group VIII metal, a bidentate ligand and, optionally, an anion of an acid with a pKa of less than 4, the catalyst compositions that may be used in the preparation of the polymers of the invention preferably also include an organic oxidant. Examples of suitable organic oxidants are 1,2- and 1,4-quinones, aliphatic nitrites, such as butyl nitrite and aromatic nitro-compounds, such as nitro-benzene and 2,4-dinitro-toluene. Preference is given to 1,4-quinones and in particular to 1,4-benzoquinone and 1,4-naphthoquinone. The quantity of organic oxidant used preferably amounts to 1-10000 and in particular 10-5000 mol per mol of Group VIII metal.

In the catalyst compositions that may be used in the preparation of the polymers of the invention, the bidentate ligand is preferably present in a quantity of 1-1000 and in particular 2-100 mol per mol of group VIII metal. Examples of bidentate ligands that may be mentioned are
a) Compounds of the general formula R¹RM¹-R-MR³R⁴, wherein R¹, R, R³ and R⁴ are the same or different, optionally polar-substituted, hydrocarbyl groups, M¹ and M are similar or different elements chosen from the group made up of phosphorus, arsenic and antimony and R represents a bivalent bridging group containing at least two carbon atoms in the bridge. Examples of these bidentate ligands are
   1,3-bis(diphenylphosphino)propane,
   1,3-bis(diphenylarsino)propane,
   1-(diphenylphosphino)-3-(diphenylstibino)propane, and
   1-(diphenylphosphino)-2-(diphenylarsino)ethane.
b) Compounds of the general formula 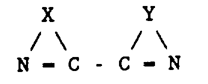 wherein X and Y represent the same or different organic bridging groups each containing three or four atoms in the bridge at least two of which are carbon atoms. Examples of these bidentate ligands are
   2,2′-bipyridine
   and
   4,4'-dicarboxy-2,2'-bipyridine.
   A further example of a bidentate ligand is 1,10-phenanthroline.
c) Compounds of the general formula R¹RP-R-SO₃H, wherein R, R¹ and R have the meanings described hereinbefore. Examples of these bidentate ligands are
   ortho-(diphenylphosphino)benzenesulphonic acid,
   2-(diphenylphosphino)ethanesulphonic acid, and
   3-(diphenylphosphino)propanesulphonic acid.
d) Compounds holding one phosphorus atom and one or more nitrogen atoms, which atoms carry no hydrogen, and in which compounds each of the nitrogen atoms is linked to the phosphorus atom by an organic bridging group containing at least one carbon atom in the bridge. Examples of these bidentate ligands are
   2-cyanoethyldiphenyl phosphine,
   tris(2-cyanoethyl)phosphine,
   2-pyridyldiphenyl phosphine,
   bis(2-pyridyl)phenyl phosphine,
   3-(diphenylphosphino)-N,N-dimethyl propionamide, and
   diphenylphosphino-N,N-dimethyl thioacetamide.
e) Compounds of the general formula R¹RM³-R-NR³R⁴, wherein M³ is arsenic or antimony and R¹, R, R³ and R⁴ and R have the meanings given hereinbefore. An example of these bidentate ligands is
   1-(diphenylarsino)-3-(dimethylamino)propane.
f) Compounds of the general formula R⁵R⁶M⁴-R-M⁵R¹, wherein R⁵ and R⁶ are the same or different, optionally polar-substituted, aryl groups, M⁴ is phosphorus or arsenic, M⁵ is sulphur or selenium and R and R¹ have the meanings given hereinbefore. Examples of these bidentate ligands are
   1-(diphenylphosphino)-3-(phenylthio)propane,
   1-(diphenylphosphino)-3-(methylthio)propane,
   1-(diphenylphosphino)-3-(2-methoxyphenylthio)propane,
   1-(diphenylarsino)-3-(phenylthio)propane, and
   1-(diphenylarsino)-3-(phenylseleno)propane.
g) Compounds of the general formula R¹M⁶-R-M⁷R, wherein M⁶ and M⁷ are the same or different elements chosen from the group made up of sulphur, selenium and tellurium and R, R¹and R have the meanings given hereinbefore. Examples of these bidentate ligands are
   1,2-bis(ethylthio)ethane,
   cis-1,2-bis(benzylthio)ethene,
   1,2-bis(phenylseleno)ethane, and
   1,2-bis(phenylthio)propane.

In the catalyst compositions that may be used in the preparation of the polymers of the invention, it is preferred to employ a bidentate ligand belonging to one of the groups a) and b) mentioned hereinbefore. When a bidentate ligand belonging to group a) is used, preference is given to compounds in which M¹ and M both represent phosphorus, in which the groups R¹, R, R³ and R⁴ are identical aryl groups and in which the bridging group R has three atoms in the bridge at least two of which are carbon atoms and in particular to such compounds in which the groups R¹, R, R³ and R⁴ are identical phenyl groups containing one or more polar substituents at least one of which is situated in a position ortho in repect to the phosphorus atom to which the phenyl group involved is bound. Preferably, the polar substituents are alkoxy groups and in particular methoxy groups. Examples of such bidentate ligands are
1, 3-bis[di(2-methoxyphenyl)phosphino]propane,
1,3-bis[di(2,4-dimethoxyphenyl)phosphino]propane, and
1,3-bis[di(2,4,6-trimethoxyphenyl)phosphino]propane.

When a bidentate ligand belonging to group a) is used, 1,3bis[di(2-methoxyphenyl)phosphino]propane is preferred.

When a bidentate ligand belonging to group b) is used, 2,2′-bipyridine and 1,10-phenanthroline are preferred.

The preparation of the polymers of the invention is preferably carried out by contacting the monomers with a solution of the catalyst composition in a diluent in which the polymers are insoluble or virtually insoluble. During polymerization, the polymers are obtained in the form of a suspension in the diluent. Suitable diluents that may be mentioned are lower alcohols, such as methanol. Polymerization may be carried out either batchwise or continuously. The polymerization may also be carried out in the gaseous phase, if desired.

The amounts of catalyst composition used in the preparation of the polymers may vary within wide ranges. Per mol of olefinically unsaturated compound to be polymerized, such a quantity of catalyst composition is preferably used as to contain from 10⁻⁷ to 10⁻³ and in particular from 10⁻⁶ to 10⁻⁴ mol of Group VIII metal.

The preparation of the polymers is carried out at a temperature of 20-150°C and a pressure of 2-150 bar and in particular at a temperature of 30-130°C and a pressure of 35-100 bar. The molar ratio of the olefinically unsaturated compounds relative to carbon monoxide is preferably 10:1-1:10 and in particular 5:1-1:5.

The invention is now illustrated with the aid of the following examples.

### Example 1

A carbon monoxide/ethene/hexadiene-1,5 terpolymer was prepared as follows. A stirred autoclave of 250 ml content was charged with a catalyst solution comprising
50 ml of methanol,
0.1 mmol of palladium acetate,
2 mmol trifluoroacetic acid, and
0.15 mmol of 1,3-bis[di(2-methoxyphenyl)phosphino]propane.

After air present in the autoclave was removed by evacuation, 10 ml hexadiene-1,5 was introduced. Then, carbon monoxide was pressed in until a pressure of 30 bar was reached, followed by ethene until a pressure of 45 bar was reached. Finally, the contents of the autoclave were heated to 80°C. Polymerization was terminated after 5 hours by cooling to room temperature and releasing the pressure. The polymer was filtered off, washed with methanol and dried in vacuo at room temperature.

7.7 g of terpolymer was obtained.

### Example 2

A carbon monoxide/ethene/hexadiene-1,5 terpolymer was prepared substantially in the same way as the terpolymer of Example 1, except for the following differences
a) the catalyst solution used comprised
   50 ml methanol,
   0.1 mmol palladium acetate,
   0.5 mmol para-toluenesulphonic acid,
   3 mmol 2,2'-bipyridine, and
   20 mmol 1,4-benzoquinone, and
b) the reaction temperature was 70°C instead of 80°C.
   8.8 g of terpolymer was obtained.

### Example 3

A carbon monoxide/styrene/octadiene-1,7 terpolymer was prepared substantially in the same way as the terpolymer of Example 1, except for the following differences
a) the catalyst solution used comprised
   15 ml of methanol,
   0.1 mmol of palladium acetate,
   1 mmol para-toluenesulphonic acid,
   3 mmol 2,2'-bipyridine, and
   20 mmol 1,4-benzoquinone, and
b) 35 ml of styrene and 10 ml of octadiene-1,7 instead of hexadiene-1,5 were introduced into the autoclave,
c) carbon monoxide was blown into the autoclave until a pressure of 40 bar instead of 30 bar was reached; no ethene was blown in, and
d) the reaction temperature was 70°C instead of 80°C.
   11.5 g of terpolymer was obtained.

### Example 4

A carbon monoxide/ethene/butadiene-1,3 terpolymer was prepared substantially in the same way as the terpolymer of Example 1, except that now 5 ml of butadiene-1,3 instead of hexadiene-1,5 was used.

0.1 g of terpolymer was obtained.

### Example 5

A carbon monoxide/ethene/butadiene-1,3 terpolymer was prepared substantially in the same way as the terpolymer of Example 2, except that now 5 ml of butadiene-1,3 instead of hexadiene-1,5 was used.

0.1 g of terpolymer was obtained.

Of Examples 1-5, Examples 1-3 are examples in accordance with the invention. Examples 4 and 5 fall outside the scope of the invention and have been included in the patent application for comparison. ¹³C-NMR analysis of the polymers obtained in Examples 1-5 afforded the following results.
1) The terpolymers prepared according to Examples 1 and 2 were made up of units -(CO)-(C₂H₄)- and units -(CO)-(C₆H₁₀)-, which units occurred ramdomly distributed within the terpolymers. The terpolymers contained on average 2 and 7 units -(CO)-(C₆H₁₀)-, respectively, per 100 units -(CO)-(C₂H₄)-.
2) The terpolymers prepared according to Example 3 were made up of units -(CO)-(C₈H₈)- and units -(CO)-(C₈H₁₄)-, which units occurred ramdomly distributed within the terpolymers. The terpolymers contained on average 10 units -(CO)-(C₈H₁₄)- per 100 units -(CO)-(C₈H₈)-.
3) The terpolymers prepared according to Examples 4 and 5 were made up of units -(CO)-(C₂H₄)- and units -(CO)-(C₄H₆)-, which units occurred ramdomly distributed within the terpolymers. The terpolymers contained on average fewer than 2 units -(CO)-(C₄H₆)- per 1000 units -(CO)-(C₂H₄)-.

## Claims

1. Copolymers of carbon monoxide with one or more mono-olefinically unsaturated compounds and with one or more diolefinically unsaturated compounds, characterized in that
a) they are obtainable by contacting a mixture of carbon monoxide with one or more mono-olefinically unsaturated compounds (A), in which the double bond is present in terminal position, and one or more diolefinically unsaturated compounds (B), in which at least one of the double bonds occupies a terminal position and in which the two double bonds are non-conjugated and separate from one another, at a temperature of 20-150°C and a pressure of 2-150 bar with a catalyst composition containing a Group VIII metal and a bidentate ligand,
b) they consist of units of the general formula -(CO)-A'- and units of the general formula -(CO)-B'-, in which A' and B' represent monomer units derived from applied monomers A and B, respectively, such that the monomer units -(CO)- alternate with the monomer units -A'- or -B'-, and
c) on average, they contain fewer than 200 units -(CO)-A'- per unit -(CO)-B'-.

2. Copolymers as claimed in claim 1, characterized in that on average they contain fewer than 100 units -(CO)-A'- per unit -(CO)-B'-.

3. Copolymers as claimed in claim 1 or 2, characterized in that the monomers A and B used are hydrocarbons.

4. Copolymers as claimed in claim 3, characterized in that the monomer A used is ethene or styrene and the B used is hexadiene-1,5 or octadiene-1,7.

5. Process for the preparation of copolymers as claimed in claim 1, characterized in that a mixture of carbon monoxide with one or more monomers A and with one or more monomers B is contacted at a temperature of 20-150°C and a pressure of 2-150 bar with a catalyst composition containing a Group VIII metal and a bidentate ligand.

6. Process as claimed in claim 5, characterized in that the catalyst composition includes palladium as Group VIII metal.

7. Process as claimed in claim 5 or 6, characterized in that the Group VIII metal is incorporated in the catalyst composition in the form of a salt of a carboxylic acid.

8. Process as claimed in one or more claims 5-7, characterized in that, moreover, the catalyst composition includes an anion of an acid with a pKa of less than 4.

9. Process as claimed in claim 8, characterized in that the catalyst composition includes an anion of a sulphonic acid, or of a halogen carboxylic acid.

10. Process as claimed in claim 8, characterized in that the anion of an acid with a pKa of less than 4 is included in the catalyst composition in a quantity of 1-1000 equivalents per mol of Group VIII metal.

11. Process as claimed in one or more of claims 5-10, characterized in that the catalyst composition includes the bidentate ligand in a quantity of 1-1000 mol per mol of Group VIII metal.

12. Process as claimed in one or more of claims 5-11, characterized in that the catalyst composition includes a compound of the general formula R¹RM¹-R-MR³R⁴, wherein
R¹, R, R³ and R⁴ are the same or different, optionally polar-substituted, hydrocarbyl groups, M¹ and M are the same or different elements chosen from the group made up of phosphorus, arsenic and antimony and R represents a bivalent bridging group containing at least two carbon atoms in the bridge, as bidentate ligand.

13. Process as claimed in one or more of claims 5-12, characterized in that polymerization is carried out at a temperature of 30-130°C, a pressure of 35-100 bar and a molar ratio of the olefinically unsaturated compounds relative to carbon monoxide of 10:1-1:10, and in that per mol of olefinically unsaturated compound to be polymerized, such a quantity of catalyst composition is used as to contain 10⁻⁷-10⁻³ mol of Group VIII metal.

## Patentansprüche

1. Copolymerisate aus Kohlenmonoxid und einer oder mehreren monoolefinisch ungesättigten Verbindungen sowie einer oder mehreren diolefinisch ungesättigten Verbindungen, dadurch gekennzeichnet, daß sie
a) durch Kontaktieren einer Mischung aus Kohlenmonoxid und einer oder mehreren monoolefinisch ungesättigten Verbindungen (A), in denen die Doppelbindung endständig ist, sowie einer oder mehreren diolefinisch ungesättigten Verbindungen (B), in denen mindestens eine der Doppelbindungen endständig ist und in denen die beiden Doppelbindungen nichtkonjugiert und voneinander getrennt vorliegen, bei einer Temperatur von 20-150°C und einem Druck von 2-150 bar mit einer ein Metall der Gruppe VIII und einen zweizähnigen Liganden enthaltenden Katalysatorzusammensetzung erhältlich sind,
b) aus Einheiten der allgemeinen Formel -(CO)-A'- und Einheiten der allgemeinen Formel -(CO)-B'-, bei denen A' und B' von den eingesetzten Monomeren A bzw. B abgeleitete Monomereinheiten bedeuten, so aufgebaut sind, daß die Monomereinheiten -(CO)- mit den Monomereinheiten -A'- oder -B'- alternieren, und
c) im Mittel weniger als 200 Einheiten (-CO)-A'- pro Einheit -(CO)-B'- enthalten.

2. Copolymerisate nach Anspruch 1, dadurch gekennzeichnet, daß sie im Mittel weniger als 100 Einheiten-(CO)-A'- pro Einheit -(CO)-B'- enthalten.

3. Copolymerisate nach Anspruch 1 oder 2, dadurch gekennzeichnet, daß man als Monomere A und B Kohlenwasserstoffe verwendet.

4. Copolymerisate nach Anspruch 3, dadurch gekennzeichnet, daß man als Monomer A Ethen oder Styrol und als B Hexadien-1,5 oder Octadien-1,7 verwendet.

5. Verfahren zur Herstellung von Copolymerisaten nach Anspruch 1, dadurch gekennzeichnet, daß man eine Mischung aus Kohlenmonoxid und einem oder mehreren Monomeren A sowie einem oder mehreren Monomeren B bei einer Temperatur von 20-150°C und einem Druck von 2-150 bar mit einer ein Metall der Gruppe VIII und einen zweizähnigen Liganden enthaltenden Katalysatorzusammensetzung kontaktiert.

6. Verfahren nach Anspruch 5, dadurch gekennzeichnet, daß die Katalysatorzusammensetzung als Metall der Gruppe VIII Palladium enthält.

7. Verfahren nach Anspruch 5 oder 6, dadurch gekennzeichnet, daß das Metall der Gruppe VIII in Form eines Carbonsäuresalzes in der Katalysatorzusammensetzung enthalten ist.

8. Verfahren nach einem oder mehreren der Ansprüche 5-7, dadurch gekennzeichnet, daß die Katalysatorzusammensetzung außerdem ein Anion einer Säure mit einem pKa kleiner 4 enthält.

9. Verfahren nach Anspruch 8, dadurch gekennzeichnet, daß die Katalysatorzusammensetzung ein Anion einer Sulfonsäure oder einer Halogencarbonsäure enthält.

10. Verfahren nach Anspruch 8, dadurch gekennzeichnet, daß die Katalysatorzusammensetzung das Anion einer Säure mit einem pKa kleiner 4 in einer Menge von 1-1000 Äquivalenten pro Mol des Metalls der Gruppe VIII enthält.

11. Verfahren nach einem oder mehreren der Ansprüche 5-10, dadurch gekennzeichnet, daß die Katalysatorzusammensetzung den zweizähnigen Liganden in einer Menge von 1-1000 Mol pro Mol des Metalls der Gruppe VIII enthält.

12. Verfahren nach einem oder mehreren der Ansprüche 5-11, dadurch gekennzeichnet, daß die Katalysatorzusammensetzung als zweizähnigen Liganden eine Verbindung der allgemeinen Formel R¹RM¹-R-MR³R⁴ enthält, wobei R¹, R, R³ und R⁴ für gleiche oder verschiedene, gegebenenfalls polarsubstituierte Kohlenwasserstoffreste stehen, M¹ und M für gleiche oder verschiedene, aus der Gruppe Phophor, Arsen und Antimon ausgewählte Elemente stehen und R eine zweiwertige Brückengruppe mit mindestens zwei Kohlenstoffatomen in der Brücke bedeutet.

13. Verfahren nach einem oder mehreren der Ansprüche 5-12, dadurch gekennzeichnet, daß die Polymerisation bei einer Temperatur von 30-130°C, einem Druck von 35-100 bar und einem Molverhältnis der olefinisch ungesättigten Verbindungen zu Kohlenmonoxid von 10:1-1:10 erfolgt und daß pro Mol zu polymerisierender olefinisch ungesättigter Verbindung eine Menge an Katalysatorzusammensetzung verwendet wird, die 10⁻⁷-10⁻³ Mol des Metalls der Gruppe VIII enthält.

## Revendications

1. Copolymères du monoxyde de carbone avec un ou plusieurs composés monooléfiniquement insaturés et avec un ou plusieurs composés dioléfiniquement insaturés, caractérisés en ce que
a) on peut les obtenir par la mise en contact d'un mélange de monoxyde de carbone avec un ou plusieurs composés monooléfiniquement insaturés (A) dans lesquels la double liaison est présente en position terminale et avec un ou plusieurs composés dioléfiniquement insaturés (B) dans lesquels au moins l'une des doubles liaisons se présente en position terminale et dans lesquels les deux doubles liaisons sont non conjuguées et mutuellement séparées, à une température de 20 à 150°C et sous une pression de 2 à 150 bars, avec une composition catalytique contenant un métal du groupe VIII et un ligand bidenté,
b) ils sont constitués d'unités de la formule générale -(CO)-A'- et d'unités de la formule générale -(CO)-B'-, dans lesquelles A' et B' représentent des unités monomériques qui dérivent des monomères A et B appliqués respectivement, en une manière telle que les unités monomériques -(CO)- alternent avec les unités monomériques -A'- ou -B'- et
c) ils contiennent, en moyenne, moins de 200 unités -(CO)-A'- par unités -(CO)-B'-.

2. Copolymères suivant la revendication 1, caractérisés en ce qu'ils contiennent, en moyenne, moins de 100 unités -(CO)-A'- par unité -(CO)-B'-.

3. Copolymères suivant la revendication 1 ou 2, caractérisés en ce que les monomères A et B employés sont des hydrocarbures.

4. Copolymères suivant la revendication 3, caractérisés en ce que le monomère A employé est l'éthène ou le styrène et le monomère B employé est l'hexadiène-1,5 ou l'octadiène-1,7.

5. Procédé de préparation de copolymères suivant la revendication 1, caractérisé en ce que l'on met un mélange de monoxyde de carbone et d'un ou plusieurs monomères A et d'un ou plusieurs monomères B en contact à une température de 20 à 150°C et sous une pression de 2 à 150 bars avec une composition catalytique contenant un métal du groupe VIII et un ligand bidenté.

6. Procédé suivant la revendication 5, caractérisé en ce que la composition catalytique comprend du palladium à titre de métal du groupe VIII.

7. Procédé suivant la revendication 5 ou 6, caractérisé en ce que l'on incorpore le métal du groupe VIII à la composition catalytique sous la forme d'un sel d'un acide carboxylique.

8. Procédé suivant une ou plusieurs des revendications 5 à 7, caractérisé en ce que, de surcroît, la composition catalytique contient un anion d'un acide qui possède un pKa inférieur à 4.

9. Procédé suivant la revendication 8, caractérisé en ce que la composition catalytique comprend un anion d'un acide sulfonique ou d'un acide carboxylique halogéné.

10. Procédé suivant la revendication 8, caractérisé en ce que l'anion d'un acide qui possède un pKa inférieur à 4 est incorporé à la composition catalytique en une proportion de 1 à 1000 équivalents par mole de métal du groupe VIII.

11. Procédé suivant une ou plusieurs des revendications 5 à 10, caractérisé en ce que la composition catalytique comprend le ligand bidenté en une proportion de 1 à 1000 moles par mole du métal du groupe VIII.

12. Procédé suivant une ou plusieurs des revendications 5 à 11, caractérisé en ce que la composition catalytique comprend un composé répondant à la formule générale R¹RM¹-R-MR³R⁴, dans laquelle les symboles R¹, R, R³ et R⁴ ont des significations identiques ou différentes et représentent chacun indépendamment un radical hydrocarbyle à substitution polaire éventuelle, M¹ et M représentent des éléments identiques ou différents choisis dans le groupe formé par le phosphore, l'arsenic et l'antimoine et R représente un radical de pontage bivalent contenant au moins deux atomes de carbone dans le pont, à titre de ligand bidenté.

13. Procédé suivant une ou plusieurs des revendications 5 à 12, caractérisé en ce que l'on entreprend la polymérisation à une température de 30 à 130°C, sous une pression de 35 à 100 bars et avec un rapport molaire des composés oléfiniquement insaturés au monoxyde de carbone de 10:1 à 1:10 et en ce que, par mole de composé oléfiniquement insaturé à polymériser, on utilise une proportion de composition catalytique telle qu'elle contienne l0⁻⁷ à 10⁻³ mole de métal du groupe VIII.
